# EUROPEAN PATENT APPLICATION

(11) **EP 2 463 798 A1**
(43) Date of publication of application: **13.06.2012**
(21) Application number: 10191824.1
(22) Date of filing: 19.11.2010
(51) Int. Cl.: G06F 21/00, G06F 3/041, G06F 3/048

(54) **Pressure password for a touchscreen device**

(71) Applicant: Research In Motion Limited, Waterloo, ON N2L 3W8 (CA)
(72) Inventor: Coggill, Henry Dunstan, Slough SL1 3XE (GB)
(74) Representative: Moore, Barry

(57) **Abstract**

A handheld communication or computing device having a touchscreen interface is configured to permit access in response to detection of a pressure-based password by a plurality of force sensors, each one of the force sensors corresponding to one of a plurality of sensing regions defined on the surface of the touchscreen interface. Upon detecting a sequence of presses applied to a plurality of the force sensors, the detected sequence is compared to previously stored information to determine if it matches. If there is a match, access to functions and/or data at the device is granted.

## Description

The present application relates generally to password entry on a touchscreen communication or data processing device.

Computing and communication devices, such as smartphones, tablets, and the like, often store sensitive or confidential information. To protect such information, as well as to prevent unauthorized access to functions on the device, the device may be protected with a password, PIN, or other security code or value. To access the device's functions and/or information, the user must provide the security code or value, for example via an input interface provided at the device, and may optionally be required to provide other credentials, such as a digital certificate which may be accessed from a separate smart card or other source. Typically the security code or value is only known to the authorized user; if another party, lacking this information, obtains the device, he or she will not be able to access the functions or information. An attacker seeking to gain access to the communication device may attempt to gain possession of the password a number of ways, for example by engaging in password cracking, such as dictionary attacks; spoofing or phishing to trick the user into revealing the password; or observation or recording the actions of the user while entering the password.

### GENERAL

The methods and systems described herein may provide for the definition and detection of passwords on a touchscreen communication or computing device using contact and pressure detected via a touchscreen interface. The passwords described herein may represent a sequence of values with or without specific meaning, such as a random value, a security value or code such as a personal identification number or "PIN", a passphrase, access code, secret word, key value, and the like. The term "password" as used herein generally refers to input provided for the purpose of validation and obtaining grant of access to data stores, functions, or both data stores and functions available at or via the communication or computing device.

Thus, the embodiments described herein may provide a handheld communication device, comprising: a touchscreen interface configured to detect contact at each of a plurality of sensing regions defined at a surface of the touchscreen interface; a plurality of force sensors, each force sensor corresponding to one of the plurality of sensing regions, each force sensor being configured to detect a press comprising force above a predetermined threshold applied at the corresponding sensing region; and a processor configured to: store in memory a detected sequence of presses applied to each of said sensing regions, wherein contact is continuously detected at each of said sensing region while said sequence is being detected; match each said sequence of presses against previously stored data at the device; and permit access to functions or data at the device upon determining that each of said sequence of presses matches the previously stored data.

In one aspect, the plurality of sensing regions may comprise two sensing regions.

In another aspect, the plurality of sensing regions may comprise two sensing regions, and the sequences of presses applied to each of the corresponding sensing regions are applied concurrently.

In a further aspect, the at least one detected sequence of presses may comprise presses of varying force.

In still another aspect, the processor may be further configured to detect that entry of a sequence of presses at a sensing region is terminated when a break in contact is detected at the sensing region.

In yet another aspect, each of the plurality of sensing regions may be defined at the surface of the touchscreen interface in positions within a natural reach of a user's thumb when the device is gripped by the user's hands.

In the embodiments herein, the touchscreen interface may comprise a capacitive touchscreen interface. Further, the force sensors may comprise capacitive force sensors. In still other aspects, the device comprises a smartphone.

The embodiments herein may also provide a method of allowing access to functions or data at a handheld communication device, the method comprising: detecting contact at each of a plurality of sensing regions, the sensing regions being defined at a surface of a touchscreen interface of the device, the touchscreen interface being configured to detect said contact; detecting a sequence of presses applied to each of said sensing regions using a corresponding force sensor, wherein contact is continuously detected at each of said sensing regions while said sequence is being detected; matching each said sequence of presses against previously stored data at the device; and permitting access to functions or data at the device upon determining that each of said sequence of presses matches the previously stored data.

In one aspect of the above method, the plurality of sensing regions may comprise at least two sensing regions.

In a further aspect, detecting contact comprises detecting said contact at each of two sensing regions and detecting the sequence of presses may comprise detecting said sequence of presses applied concurrently at said two sensing regions.

In still a further aspect, detecting contact may comprise detecting said contact at each of three sensing regions, and detecting the sequence of presses comprises detecting a first sequence of presses applied concurrently at a first and a second of said sensing regions, and detecting a second sequence of presses applied concurrently at a first and a third of said sensing regions.

In another aspect, at least one detected sequence of presses may comprise presses of varying force.

In yet another aspect, each of the plurality of sensing regions may be defined at the surface of the touchscreen interface in positions within a natural reach of a user's thumb when the device is gripped by the user's hands.

Further, the embodiments herein provide that each of the plurality of sensing regions may be defined in positions proximate to a corresponding corner of the touchscreen interface.

In further aspects, the touchscreen interface may comprise a capacitive touchscreen interface; the force sensors comprise capacitive force sensors; and the device comprises a smartphone.

There may also be provided a computer program product comprising a storage medium, which may be non-transitory or physical, bearing code which, when executed, causes a computing device comprising a touchscreen interface and a plurality of force sensors to carry out the above-described method.

### Brief Description of the Drawings

In drawings which illustrate by way of example only embodiments of the present application,

FIG. 1 is a block diagram of an embodiment of an exemplary communication device.

FIG. 2 is a cross-sectional view of the communication device of FIG. 1.

FIG. 3 is a top view of the communication device of FIG. 2 having a display surface defined with logical sensing regions.

FIG. 4 is a further top view of the communication device of FIG. 2 having a display surface defined with further logical sensing regions.

FIG. 5 is a further top view of the communication device of FIG. 2.

FIGS. 6A to 6D are top views of an exemplary touchscreen device in a first orientation with designated contact areas on the touchscreen interface.

FIGS. 7A to 7D are top views of the exemplary touchscreen device of FIGS. 6A to 6D in a second orientation with designated contact areas on the touchscreen interface.

FIGS. 8A to 8D are top views of a further exemplary touchscreen device in a first orientation with designated contact areas on the touchscreen interface.

FIGS. 9A to 9D are top views of the further exemplary touchscreen device of FIGS. 8A to 8D in a second orientation with designated contact areas on the touchscreen interface.

FIGS. 10A to 10C are illustrations of a user entering a password at an exemplary touchscreen device in a first orientation.

FIGS. 11A to 11C are illustrations of a user entering a password at the exemplary touchscreen device of FIGS. 10A to 10C in a second orientation.

FIGS. 12A and 12B are illustrations of a user entering a password at an exemplary touchscreen device in a first orientation.

FIGS. 13A to 13C are illustrations of a user entering a password at the exemplary touchscreen device of FIGS. 12A and 12B in a second orientation.

FIGS. 14A to 14D are graphic representations of pressure passwords entered at a touchscreen device.

FIG. 15 is a graphic representation of a pressure password comprising multiple positions entered at a touchscreen device.

FIG. 16 is a graphic representation of discontinuous contact applied on a device touchscreen.

FIG. 17A is a flowchart illustrating an exemplary method for setting a pressure password at a touchscreen device.

FIG. 17B is a flowchart illustrating an exemplary method for converting an input pressure password to a digital representation.

FIGS. 18A and 18B are flowcharts illustrating exemplary methods for receiving an input password for matching against a previously defined password.

FIG. 19A is an exemplary graphical user interface for use in setting a pressure password at a touchscreen device.

FIG. 19B is an exemplary illustration of a user interface for setting password policy rules.

FIG. 20 is a flowchart illustrating an exemplary method for setting a pressure password in accordance with a policy.

FIGS. 21A to 21E are graphical representations of applied pressure on a touchscreen device corresponding to predetermined values.

### Detailed Description

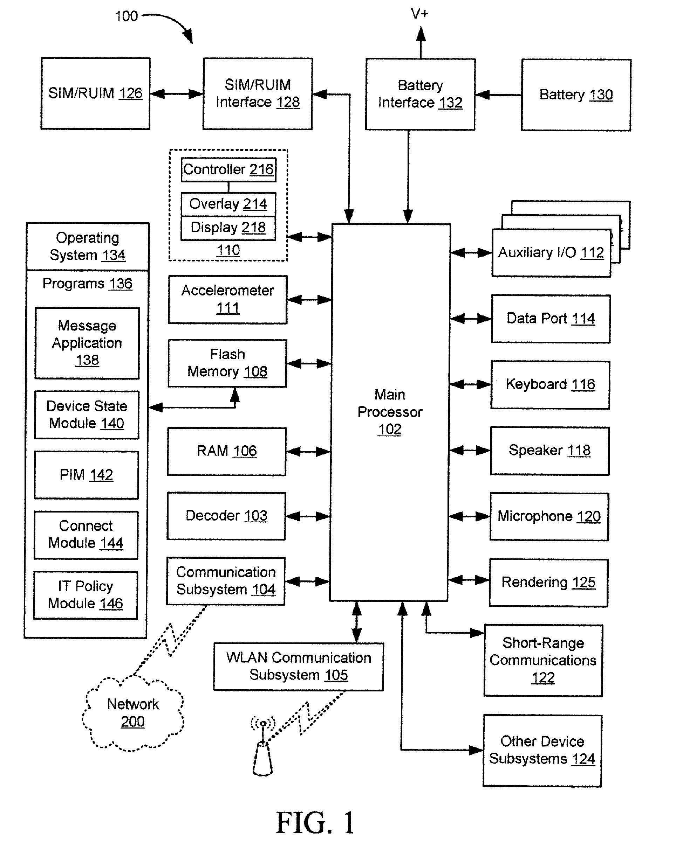

The embodiments described herein may be implemented on a communication device such as that illustrated in FIG. 1. Throughout the specification, terms such as "may" and "can" are used interchangeably and use of any particular term should not be construed as limiting the scope or requiring experimentation to implement the claimed subject matter or embodiments described herein. The communication device 100 may be a mobile device with two-way communication and advanced data communication capabilities including the capability to communicate with other mobile devices or computer systems through a network of transceiver stations. The communication device 100 can also have voice communication capabilities. Although the embodiments herein specifically refer to a "communication device", the teachings herein may be applied to any appropriate communication or data processing device, whether portable or wirelessly enabled or not, including without limitation cellular phones, smartphones, wireless organizers, personal digital assistants, desktop computers, terminals, laptops, tablets, handheld wireless communication devices, notebook computers and the like. Thus, the communication and computing devices contemplated herein may have different principal functions and form factors.

FIG. 1 is a block diagram of an exemplary embodiment of a communication device 100 adapted to communicate over wireless networks. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE, HSPA, HSPA+, EVDO and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The mobile device 100 may be provided with additional communication subsystems, such as the wireless LAN (WLAN) communication subsystem 105 also shown in FIG. 1. The WLAN communication subsystem may operate in accordance with a known network protocol such as one or more of the 802.11™ family of standards developed by IEEE. The communication subsystem 105 may be separate from, or integrated with, the communication subsystem 104 or with the short-range communications module 122. The main processor 102 also interacts with additional subsystems such as a Random Access Memory (RAM) 106, a flash memory 108, a display interface 110, an auxiliary input/output (I/O) subsystem 112, a data port 114, a keyboard 116, a speaker 118, a microphone 120, the short-range communications 122 and other device subsystems 124. The communication device may also be provided with an accelerometer 111, which may be used to detect gravity- or motion-induced forces and their direction. Detection of such forces applied to the device 100 may be processed to determine a response of the device 100, such as an orientation of a graphical user interface displayed on the display interface 110 in response to a determination of the current orientation of which the device 100.

Some of the subsystems of the communication device 100 perform communication-related functions, whereas other subsystems can provide "resident" or on-device functions. By way of example, the display interface 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display interface 110, the rendering circuit 125 analyzes and processes the data file for visualization on the display interface 110. Rendering data files originally optimized or prepared for visualization on large-screen displays on a portable electronic device display often requires additional processing prior to visualization on the small-screen portable electronic device displays. This additional processing may be accomplished by the rendering engine 125. As will be appreciated by those of skill in the art, the rendering engine can be implemented in hardware, software, or a combination thereof, and can comprise a dedicated image processor and associated circuitry, or can be implemented within main processor 102.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the communication device 100 and to personalize the communication device 100, among other things. Without the SIM/RUIM card 126, the communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system.

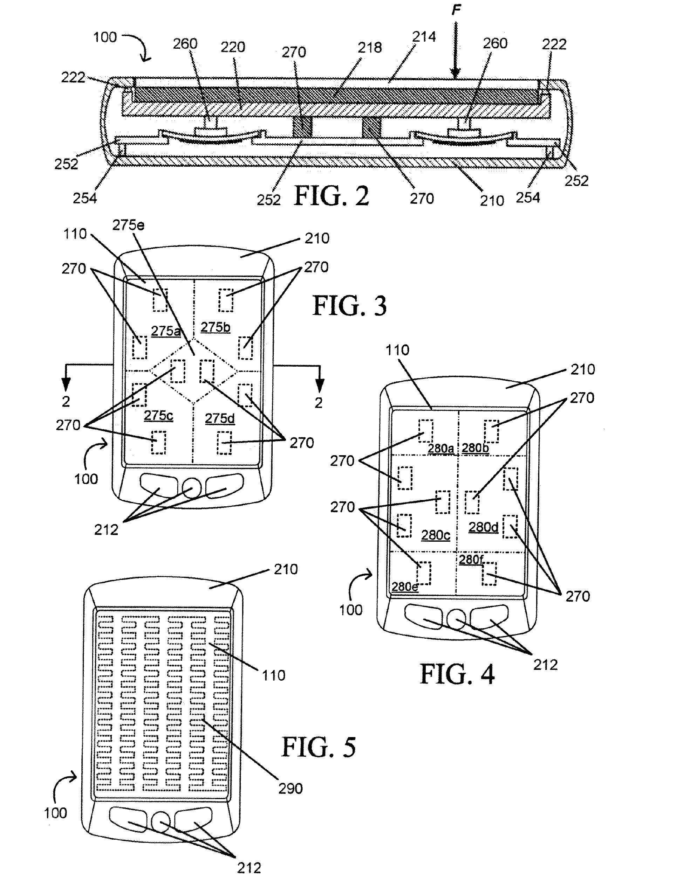

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the communication device 100 to allow the communication device 100 to use any number of services associated with the enterprise system. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards.

In use, a received signal such as a text message, an e-mail message, or web page download will be processed by the communication subsystem 104 and input to the main processor 102. The main processor 102 will then process the received signal for output to the display interface 110 or alternatively to the auxiliary I/O subsystem 112. A subscriber can also compose data items, such as e-mail messages, for example, using the keyboard 116 in conjunction with the display interface 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display interface 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display interface 110 can also be used to provide additional information such as the identity of a calling party, duration of a voice call, or other voice call related information.

The communication subsystem component 104 may include a receiver, transmitter, and associated components such as one or more embedded or internal antenna elements, Local Oscillators (LOs), and a processing module such as a Digital Signal Processor (DSP) in communication with the transmitter and receiver. Signals received by an antenna through the wireless network 200 are input to the receiver, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP. In a similar manner, signals to be transmitted are processed, including modulation and encoding, by the DSP, then input to the transmitter for digital-to-analog (D/A) conversion, frequency up conversion, filtering, amplification and transmission over the wireless network 200 via an antenna. The DSP not only processes communication signals, but also provides for receiver and transmitter control, including control of gains applied to communication signals in the receiver and the transmitter. When the communication device 100 is fully operational, the transmitter is typically keyed or turned on only when it is transmitting to the wireless network 200 and is otherwise turned off to conserve resources. Similarly, the receiver is periodically turned off to conserve power until it is needed to receive signals or information (if at all) during designated time periods. Other communication subsystems, such as the WLAN communication subsystem 105 shown in FIG. 1, may be provided with similar components as those described above configured for communication over the appropriate frequencies and using the appropriate protocols. The particular design of the communication subsystem 104 or 105 is dependent upon the communication network 200 with which the communication device 100 is intended to operate. Thus, it should be understood that the foregoing description serves only as one example.

In some embodiments, the communication device 100 may comprise a touchscreen-based device, in which the display interface 110 is a touchscreen interface that provides both a display for communicating information and presenting graphical user interfaces, as well as an input subsystem for detecting user input that may be converted to instructions for execution by the device 100. The touchscreen display interface 110 may be the principal user interface provided on the device 100, although in some embodiments, additional buttons 212 (shown in FIGS. 3-5) or other input means may be provided.

In a touchscreen device, the device 100 may comprise a housing 210, which may be formed in one or more pieces using appropriate materials and techniques, such as injection-molded plastics. The display interface 110 is mounted in the housing 210, and may be movable relative to the housing 210. Generally, construction of the touchscreen and its implementation in the communication device 100 will be understood by those skilled in the art. Examples in the art include commonly-owned U.S. Patent Application Publication Nos. 2004/0155991, 2009/0244013, 2010/0128002 and 2010/0156843. Briefly, a touch-sensitive display may comprise suitable touch-sensitive screen technology, such as a capacitive, resistive, infrared, surface acoustic wave (SAW) touch-sensitive display, strain gauge, optical imaging, dispersive signal technology, acoustic pulse recognition, and so forth, as known in the art. A capacitive touchscreen display includes a capacitive touch-sensitive overlay 214 that may comprise an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO). An example of a touchscreen display interface 110 is described in aforementioned U.S. Patent Application No. 2010/0128002. Optionally, the device 100 may also provide haptic or tactile feedback through the housing of the device 100, or through the touchscreen itself.

In one embodiment, a transmissive TFT LCD screen is overlaid with a clear touch sensor assembly that supports single and multi-touch actions such as tap, double-tap, tap and hold, tap and drag, scroll, press, flick, and pinch. The touchscreen display interface 110 detects these single and multi-touch actions, for example through the generation of a signal or signals in response to a touch, which may then be processed by the processor 102 or by an additional processor or processors in the device 100 to determine attributes of the touch event, such as the location of the touch action, whether defined by horizontal and vertical screen position data or other position data. Touch location data may include an area of contact or a single point of contact, such as a point at or near a center of the area of contact. The touchscreen display interface 110 may be provided with separate horizontal and vertical sensors or detectors to assist in identifying the location of a touch. A signal is provided to the controller 216, shown in FIG. 1, in response to detection of a touch. The controller 216 and/or the processor 102 may detect a touch by any suitable contact member on the touch-sensitive display 110.

The detected touch actions may then be correlated both to user commands and to an element or elements displayed on the display screen comprised in the display interface 110. In response to the user command, the processor may take actions with respect to the identified element or elements. Touches that are capable of being detected may be made by various contact objects, such as thumbs, fingers, appendages, styli, pens, pointers and the like, although the selection of the appropriate contact object and its construction will depend on the type of touchscreen display interface 110 implemented on the device. Depending on the technology selected for the touchscreen display interface 110, the interface 110, by itself, may detect contact events on its surface irrespective of the degree of pressure applied at the time of contact. Pressure events, and varying degrees of pressure applied to the touchscreen display interface 110, may be detected using force sensors, discussed below.

FIG. 2 illustrates a cross-section of the device 100 shown in FIG. 3 at the line 2-2 (omitting other features of the device 100). The housing 210 is shown, with the touchscreen display interface 110 comprising a touch-sensitive overlay 214 disposed over a display screen 218. The interface 110 is disposed on a tray 220. The tray 220 is provided with spacers 222 which may be flexible and compressible components, such as gel pads, spring elements, foam, and the like, which may bias the touchscreen display interface against the force sensing assemblies, or limit the movement of the display interface with respect to the housing 210. Disposed below the tray 220 is a base 252, which may comprise a printed circuit board for electrically connecting each of one or more force sensors 270 disposed thereon with the processor 102 or a separate controller 216 in communication with the processor 102. The base 252, which may be mounted on the housing 210 by means of supports 254, may also provide support and electrical connections for one or more tactile feedback devices, such as piezoelectric actuators 260. The touch-sensitive display may thus be moveable and depressable with respect to the housing 210, and floating with respect to (i.e., not fastened to) the housing 210. A force F applied to the touchscreen display 110 would then move, or depress, the display 110 towards the base 252.

The one or more force sensors 270 are disposed beneath the display interface 110. The construction and implementation of the force sensors 270 will also be understood by those skilled in the art. The force sensor or sensors 270 may include force-sensitive resistors, strain gauges, capacitive, piezoelectric or piezoresistive devices, pressure sensors, or other suitable devices. For example, each force sensor 270 may comprise a piezoelectric sensor which, when deformed due to force applied through contact by the touchscreen display interface 110 when pressure is applied to the interface 110, transmits an electrical signal to the controller 216 or processor 102. The force sensors 270 may alternatively comprise a force-sensing resistor, wherein the resistance changes as force applied to the force sensor 270 changes. As applied force on the touchscreen display 110 increases, the resistance decreases. This change is determined via a controller for each of the force sensors, and a value representative of the force at each of the force sensors 270 may be determined. Thus, each force sensor 270, whether piezoelectric or resistive, may be capable of outputting a range of voltages according to the amount of force detected. If the signal is determined to be above a predetermined threshold, the signal may be interpreted as application of pressure on the touchscreen display interface 110 associated with particular actions or responses at the device 100 (such as actuating a user interface element determined to be located at the point at which the display interface 110 was depressed). Thus, with a touchscreen display interface 110 that is sensitive to contact by a contact means, the device 110 may be configured to detect not only contact (i.e., comparatively light pressure) at the touchscreen interface 110 surface using an overlying touch sensing layer, but also heavier pressure applied to the touchscreen interface 110 using the one or more force sensors 270. The output of the force sensor 270 may be digitized by a suitable analog-to-digital converter (which may be comprised in a controller associated with the force sensor 270), not shown. Thus, signals from the force sensors 270 that vary in time due to sequences of presses or continuous presses applied via the touchscreen surface may be detected and digitized. Force as utilized throughout the specification, including the claims, refers to force measurements, estimates, and/or calculations, such as pressure, deformation, stress, strain, force density, force-area relationships, thrust, torque, and other effects that include force or related quantities.

The piezoelectric actuators 260 may be positioned at one or more locations underneath the touchscreen display interface 110. Each actuator may comprise a piezoelectric element mounted on a substrate of a suitable material such as nickel, stainless steel, brass, and so forth. Each of the piezoelectric elements and substrate may be mechanically pre-loaded, and slightly bent while supported over openings in the base 252. The actuators 260 include a force sensor disposed on the substrate. The force sensor may include a force-sensitive resistor, strain gauge, pressure sensor, capacitive, or other suitable device including a piezoelectric or piezoresistive device. These actuators 260 may be electrically connected to the controller 216 or processor 102 via the base 252, and may be used to apply force to the touchscreen display interface 110 in response to a received signal, such as a signal generated as a result of the touchscreen interface 110 being depressed by a predetermined amount.

In the examples of FIGS. 3 and 4, discrete force sensors 270 are disposed in a rosette pattern, although any other suitable pattern may be utilized, including, for example, single force sensor patterns, multiple force sensor patterns, multi-directional patterns, stacked or planar configurations, patterns of other shapes, and so forth. With a smartphone or other communication or data processing device 100 with a substantially rectangular display interface 110, at least one force sensor may be disposed generally proximate to each corner of the display 110. It will be understood that the same or different distribution patterns and the same or a different number of force sensors 270 may be used for different communication device 10 form factors. For example, a device 100 with a larger display area, such as a tablet computer, may have a greater number of force sensors 270. Each of the individual force sensors 270 may be electrically coupled to one another and to a force sensor controller (not shown) or to the processor 102, such that a change in resistance or force, due for example to pressure applied on the display interface 110, sensed at any one of the force sensors 270 may generate a signal to the controller 216 or processor 102. If the sensors 270 are coupled to each other, then the location of the detected change in resistance or force may not be discernible by the processor. If the force sensors 270 are electrically isolated and separate conductors connect each individual force sensor 270 to the controller or the processor 102, the force sensor 270 detecting applied force may be identified from among the group of force sensors 270.

Multiple force sensors 270 disposed within the communication device 100 may be logically grouped into one or more sensing regions. Examples are provided in FIGS. 3 and 4. The phantom lines in FIG 3 illustrate five logically defined sensing regions 275a, 275b, 275c, 275d and 275e. Each sensing region is associated with two force sensors 270. Thus, when pressure is applied to the surface of the display interface 110 in the vicinity of one of the force sensors 270, the force sensor 270 nearest the location at which the pressure is applied may detect the greatest force and transmit a signal accordingly to the controller or processor 102. If the force sensor 270 is adapted to measure the amount of force applied at or near the sensor, the sensor 270 may transmit a signal to the controller or processor indicating the amount of force applied. If the detected force is greater than a predetermined level, it may be positively identified as a pressure event. If the sensor 270 is configured to detect forces at multiple levels, it may provide distinct signals to the controller or processor 102 to indicate when an applied force has been detected above a first, a second, and optionally a third or further predetermined level. The controller or processor 102 may thus identify detected pressure events as heavier or lighter presses.

FIG. 4 illustrates another arrangement of the sensing regions, in this case six, 280a, 280b, 280c, 280d, 280e, and 280f. It can be seen in this example that a different number of force sensors 270 is logically assigned to each of the sensing regions. Each of the force sensors 270 depicted herein has a substantially rectangular shape; however, the force sensors 270 may take any suitable shape, and the number and arrangement of the force sensors 270 in the device 100 may assume any suitable number and geometry. Similarly, the actuators 260 may have any suitable number, configuration or arrangement. More or fewer sensing regions may be logically defined in association with the force sensors 270, or with the actuators 260, and conversely, one or more force sensors 270 or actuators 260 may be associated with a given defined sensing region. It will be appreciated, however, that a communication device 100 provided with both force sensors 270 and a suitable touchscreen, such as a capacitive touchscreen, may detect not only contact or light touches at given locations of the touchscreen surface, but also applications of greater force on the touchscreen. The applied force may be detected as being localized in a specific region or area of the touchscreen, or else simply detected as having been applied, and correlated to a specific region or area based on the location of the detected contact on the screen.

If the detected pressure event may be localized by the force sensors 270 within the device 100, the pressure event may be associated with an entire sensing region associated with that force sensor 270. Thus, the processor 102 may interpret a signal from a force sensor 270 indicating a press as an instruction to invoke an action or command in respect of any displayed content in the sensing region associated with the force sensor 270. In some cases, pressure may be continuously applied across the touchscreen, rather than localized in one particular location. The pressure event may therefore be detected by multiple force sensors 270 and may be associated with one or more sensing regions. The detected event may therefore be interpreted by the processor 102 as a command invoking user interface elements displayed on the touchscreen display 110 either within each of the affected sensing regions, or along the path traced by the applied force.

FIG. 5 illustrates a further type of force sensor 290, which comprises a force sensor in a continuous, serpentine pattern. The force sensor 290 may be disposed below the touchscreen display interface 110, but electrically isolated from the touch sensor used to detect contact on the touchscreen display. The force sensor 290 is electrically connected to the controller or processor 102. The force sensor 290 thus provides coverage of a substantial area of the display. The sensor 290 may comprise one of the materials identified above. A touch imparted on the touchscreen display interface 110 with sufficient force may cause the force sensor 290 to undergo an electrical change, which may be due to a change in the geometry of the material of the sensor 290 due to displacement or distortion, and a change in resistivity as a result of the applied pressure.

If a detected pressure event cannot be localized on the touchscreen by the controller or processor 102, then the location of the pressure event may be determined based on detection of the location of contact by the touch-sensitive component of the touchscreen display interface 110. Accordingly, the detection and localization of the pressure event comprises two steps: a detection, by the touchscreen display interface 110 and its associated controller or the processor 102, of the location of contact on the touchscreen; and a detection of applied force on the touchscreen display interface 110. With these detected events, the processor 102 or the controller may determine that a pressure event is occurring at the location of contact.

As noted above, security measures may be implemented on communication or computing devices, such as personal computers, mobile communication devices, and the like, to discourage unauthorized access. For example, the device may require that the user enter specific credentials, such as a predetermined password or a personal identification number (PIN), prior to granting access to data or functions available on the device. The authorized user may need to log in using a combination of credentials, such as a password and information from a smart card, in order to gain access to the device.

An attacker who acquires knowledge of the password would therefore be able to gain access to the data and functions of the device. Although the authorized user may safeguard the credentials by committing them to memory and not recording them where they may be discovered by others, even the mere entry of the credentials at the device may reveal the credentials to others. For example, the attacker may engage in "shoulder surfing" by observing the user enter the credentials on the device and noting the movement of the user's hand or fingers as the credentials are typed out on a keyboard or input via a touchscreen interface. The attacker may then replay the password that was observed on the device, and gain access. In the case of a touchscreen device that receives the credentials through input detected by the screen, marks left by dirt or natural oils from the user's fingertips may reveal a pattern on the touchscreen, thus making it possible for the attacker to reverse-engineer the entered password.

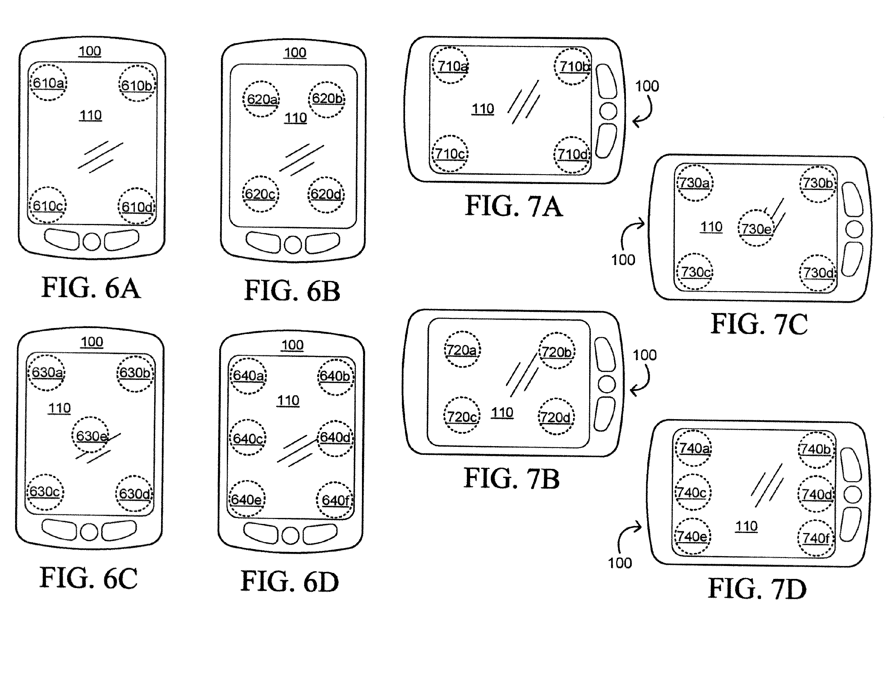

Accordingly, on a touchscreen device, password entry may be accomplished in a manner that reduces movement of the user's hands, fingers and thumbs while entering the password to assist in concealing hints to the actual password as it is entered. As noted above, sensing regions may be defined on the surface of a touchscreen interface 110 of a device. Examples of other sensing regions are shown in FIGS. 6C through 9D. FIG. 6A, for example, illustrates a first exemplary touchscreen device 100 with a smartphone form factor, having four sensing regions 610a, 610b, 610c, 610d. These sensing regions are generally disposed proximate to corners of the touchscreen interface 110. Similarly, FIG. 6B shows sensing regions 620a, 620b, 620c, 620d also positioned proximate to corners of the touchscreen interface 110, but set further in towards the center of the device 110. FIG. 6C illustrates five sensing areas 630a, 630b, 630c, 630d and 630e, the first four of which are positioned in similar locations to the sensing regions 610a, 610b, 610c, 601d, and the last of which is positioned in a substantially central location in the display 110. FIG. 6D illustrates six sensing regions 640a, 640b, 640c, 640d, 640e and 640f, in which four regions, 640a, 640b, 640e and 640f are disposed generally proximate to corners of the display 110, while the remaining two, 640c and 640d, are disposed between each of 640a, 640e and 640b, 640f respectively to provide a row of sensing regions along each of the vertical edges of the touchscreen display 110, while the device 100 is held in a "portrait" orientation, i.e., with device held so that the longer dimension is substantially vertical or upright when viewed by the user.

FIGS. 7A through 7D illustrate corresponding sensing regions to FIGS. 6A through 6D for a device 100 similar to that of FIGS. 6A through 6D, while the device 100 is held in a "landscape orientation", i.e., generally perpendicular to the portrait orientation. The landscape and portrait orientations are illustrated because they are common orientations used while a user is using the device functions and entering data via the touchscreen; however, it will be appreciated by those skilled in the art that the communication device 100 may be used in other orientations, including at oblique angles and rotated 180 degrees from the orientations shown in FIGS. 6A through 7D. In the example of FIG. 7A, sensing regions 710a, 710b, 710c and 710d are defined to be proximate to corners of the touchscreen interface 110, similar to FIG. 6A. In FIG. 7B, sensing regions 720a, 720b, 720c, 720d are disposed proximate to the corners of the display 110, but arranged closer to the center of the display 110. A fifth sensing regions 730e is provided to accompany the corner sensing regions 730a,730b, 730c, 730d in FIG. 7C, and finally FIG. 7D illustrates six sensing regions 740a, 740b, 740c, 740d, 740e, and 740f. Although all of the sensing regions illustrated in FIGS. 7A through 7D are arranged in similar arrangement to each other as in FIGS. 6A through 6D, the locations of their respective sensing regions are not necessarily identical; for example, although both FIGS. 6D and 7D illustrate six sensing regions, both disposed with three sensing regions along opposing sides of the touchscreen display 110, it can be seen that the spacing between the sensing regions 740a, 740c, 740e is less than the spacing between sensing regions 640a, 640c, 640e. If a user were to touch two of the sensing regions 740a, 740c consecutively, the user's finger, thumb or other contact means would not need to travel as far as would be required to touch the sensing regions 640a and 640b consecutively.

Contact at these sensing regions may be detected using the touchscreen interface 110 itself even when little pressure or force is applied by the user in contacting the screen; for example, a capacitive touchscreen interface may detect contact even when the user only lightly touches the screen surface. Applied force or pressure at these sensing regions may be detected by a force sensor, such as the aforementioned force sensor or sensors 270. It is not necessary for a force sensor to be disposed within the areas defined by the sensing regions shown in FIGS. 6A through 7D. It may be sufficient, for example, for a single force sensor 270 to be disposed behind the touchscreen interface 110 to sense any force applied to the touchscreen over a predetermined threshold, such as a minimum threshold required for detection by the force sensor 270. Provided contact with the touchscreen interface 110 is also detected at the time the applied force is detected by the force sensor 270, the detected applied force may be associated with the location at which the contact was detected. However, if applied force is to be detected at more than one sensing region concurrently, then two or more force sensors may be used to detect forces applied at the touchscreen interface 110. If the two or more force sensors 270 are disposed such that at least one force sensor 270 is located closer to each of a corresponding sensing region, and provided the force sensors 270 are configured such that pressure events detected at an individual force sensor 270 are associated with the specific force sensor, force or pressure applied at a given sensing region may be associated with the specific force sensor that detected the applied force, and thus associated with the associated sensing region.

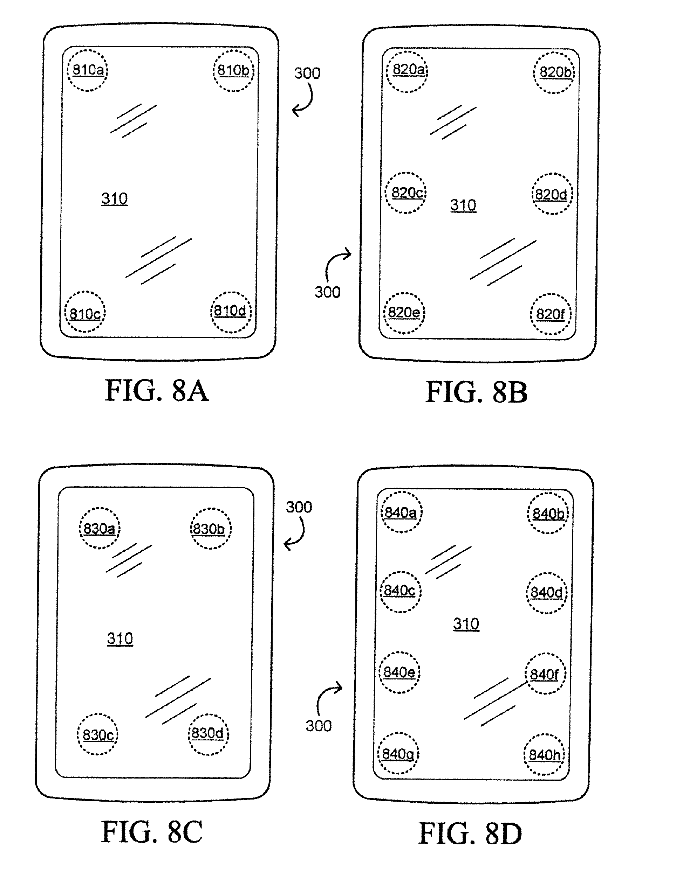

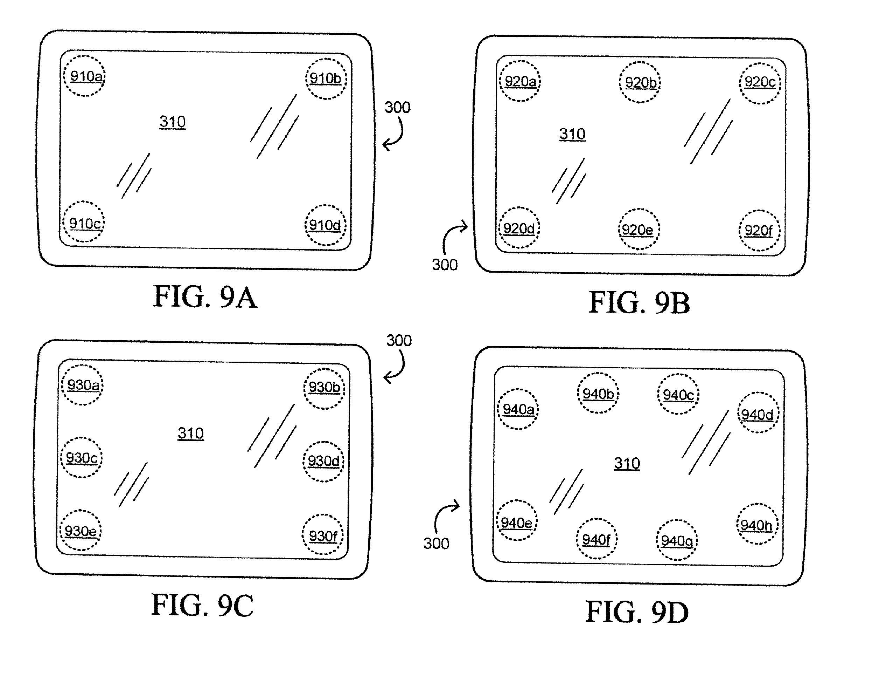

The arrangement of sensing regions need not be limited to a smartphone form factor, or to devices that are sized similarly to a smartphone. FIGS. 8A through 9D illustrate sensing regions as they may be arranged for a larger touchscreen device 300, such as a tablet computer or e-book reader. FIG. 8A illustrates four sensing regions 810a, 810b, 810c, 810d, again arranged to be substantially proximate to corners of the touchscreen display 310. FIG. 8B illustrates four corner sensing regions 820a, 820b, 820e, 820f, with two intermediate sensing regions 820c, 820d along each vertical side of the device 100 as the device is held in a substantially portrait orientation. FIG. 8C illustrates four sensing regions 830a, 830b, 830c, 830d also disposed near the corners of the display 310, but positioned closer to the center of the screen than in FIG. 8A. Finally, FIG. 8D illustrates an embodiment in which eight sensing regions 840a..h are defined along the edges of the display 310, with four along each vertical edge when the device 300 is held in a portrait orientation. FIGS. 9A through 9D illustrate the position of sensing regions as they may be defined for a tablet or other computing device 300 in a landscape orientation. FIG. 9A illustrates four corner sensing regions 910a, 910b, 910c, 910d; FIG. 9B illustrates six sensing regions 920a, 920b, 920c, 920d, 920e, 920f, arranged such that three sensing regions are disposed along the longest edges of the display 310. FIG. 9C also illustrates the position of six sensing regions 930a, 930b, 930c, 930d, 930e, 930f, but arranged so that three sensing regions are disposed along the shorter edges of the display 310. FIG. 9D illustrates eight sensing regions, with four regions 940a, 940d, 940e, 940h located substantially proximate to a corner of the display 310, but inset slightly from the long edges of the display 310 compared the positions of the remaining sensing regions 940b, 940c, 940f, and 940g.

For ease of reference herein, it will be appreciated that unless a specific size of the display is referred to, display or touchscreen interface 110 and device 100 may apply equally to any form factor, whether smartphone, tablet, MP3 player, personal digital assistant, and the like. In all of the foregoing examples, the size and the shape of the sensing region may be defined as appropriate for use in accordance with the within embodiments. For example, the sensing regions may be defined to have approximately the same area as the surface area covered by typical adult thumb or finger when pressed against the display 110, whether the sensing region is defined as a rounded shape or a polygon. The sensing areas may alternatively be arranged to as to completely subdivide the entire surface area of the touchscreen interface 110, as in the example of FIG. 3, in which the sensing regions 275a, 275b, 275c, 275d, 275e cover the entirety of the surface of the display 110. The device 100, however, is adapted to sense contact on the touchscreen display 110 as well as force applied to the touchscreen display 110, so as to associate both the contact and the applied force with a particular location on the display 110, i.e., a discrete sensing region.

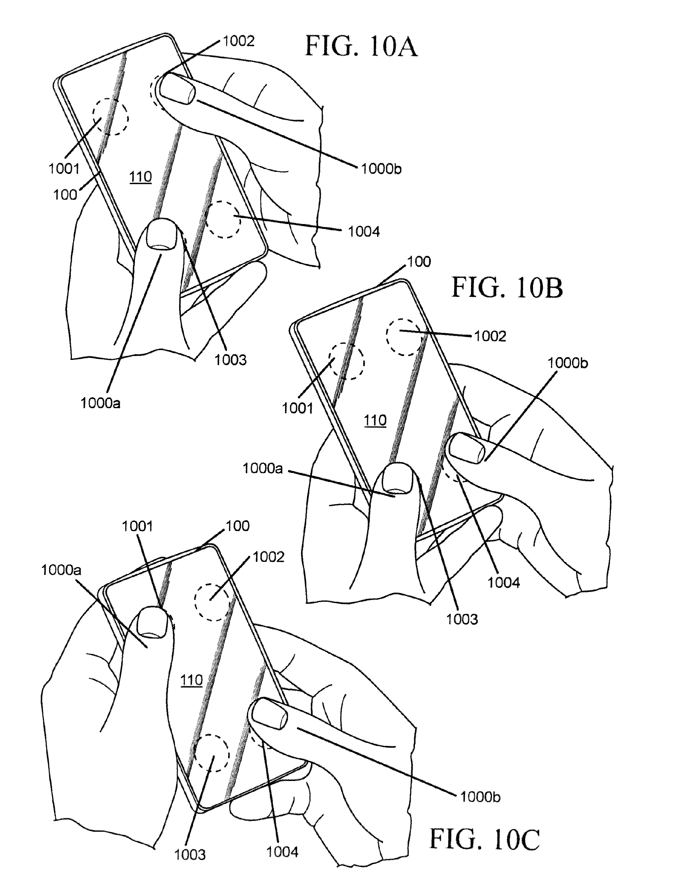

The device 100 may thus be configured to receive input via contact and optionally force applied in these discrete sensing regions, which may be used as a form of password entry on the device 100. This contact and force may be applied by the user while gripping the device 100 in one or both hands. Turning to FIGS. 10A through 10C, examples of a small entertainment or smartphone-form factor device 100 are shown, in which a user's hands grip the device 100. In FIG. 10A, sensing regions 1001, 1002, 1003, 1004 are defined on the touchscreen interface 110 such that they are positioned substantially proximate the corners of the device. A user's hands are illustrated, with a left thumb 1000a positioned over the lower left-hand corner sensing region 1003 and a right thumb 1000b positioned over the upper right-hand corner sensing region 1002. In FIG. 10B, the user's left and right thumb are positioned at the lower left-hand and lower right-hand sensing regions 1003, 1004, respectively. Again, the position of the user's thumbs is similar to a typical grip that the user may use to hold the device 100. FIG. 10C illustrates a third position of the user's hands, in which the left-hand thumb has moved to the upper left-hand corner sensing region 1001.

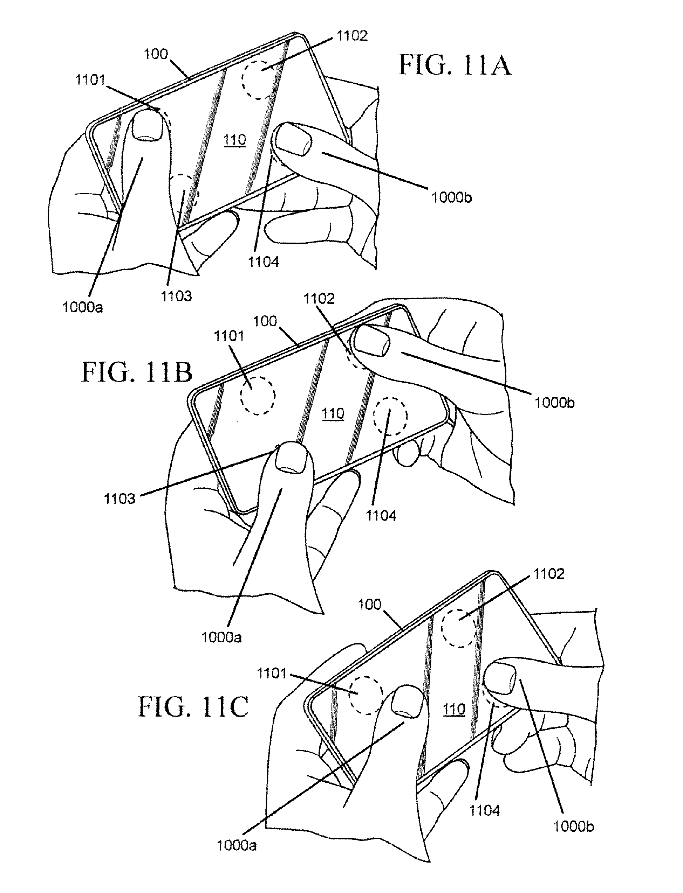

FIGS. 11A through 11C illustrate a similar form factor touchscreen device 100 oriented in a substantially landscape orientation, again with a user's thumbs positioned over designated sensing regions. In these figures, four sensing regions 1101, 1102, 1103, 1104 are defined, each generally proximate to a corner of the display 110 of the device 100. In FIG. 11A, the left thumb 1000a is positioned over the upper left-hand corner sensing region 1101, and the right thumb 1000b over the lower right-hand corner sensing region 1104. In FIG. 11B, the thumbs 1000a, 1000b have shifted positions, with the left-hand thumb 1000a now positioned over the lower left-hand corner sensing region 1103 and the right-hand thumb 1000b now positioned over the upper right-hand sensing region 1102. Movement of the user's thumbs from the position shown in FIG. 11A to the position of FIG. 11B may be carried out as a two-step process; for example, the user may slide or left the left-hand thumb 1000a first, and reposition it in the position shown in FIG. 11B prior to moving the right-hand thumb 1000b. However, the movement of both thumbs 1000a, 1000b may take place at approximately the same time. FIG. 11C illustrates the position of the user's thumb 1000a outside any of the designated sensing regions.

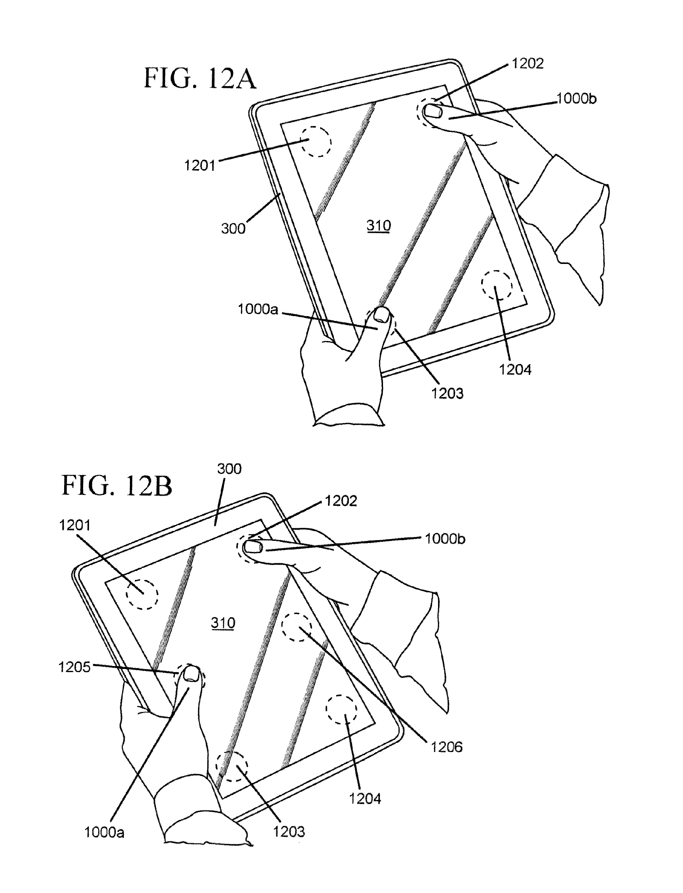

FIG. 12A illustrates a tablet form factor device 300, with a touchscreen interface 310 on which four sensing regions 1201, 1202, 1203, 1204 are defined. In this example, the user's left-hand thumb 1000a is positioned on the lower left-hand corner sensing region 1203 and the right-hand thumb 1000b is positioned on the upper right-hand corner sensing region 1202. In FIG. 12B, an additional two sensing regions 1205, 1206 are included along the edges of the device 300, and the left thumb 1000a is positioned over the center left-hand sensing region 1205, while the right-hand thumb 1000b is positioned over the upper right-hand sensing region 1202.

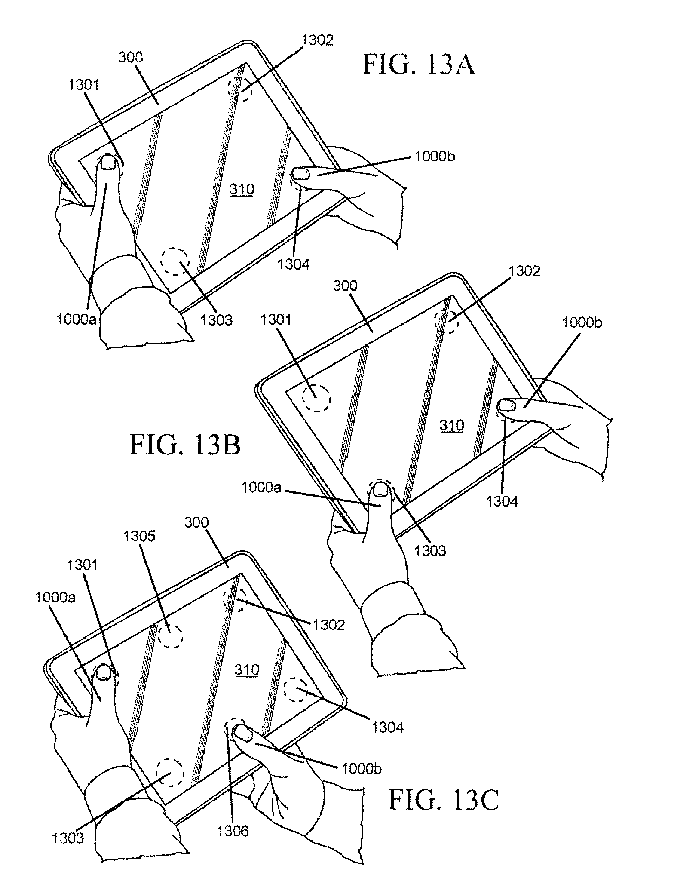

FIGS. 13A through 13C illustrate still further examples of a user holding the tablet form factor device 300, now in a substantially landscape orientation. In FIG. 13A, the four sensing regions 1301, 1302, 1303, 1304 defined on the touchscreen interface 310 are again disposed substantially close to the corners of the device 300. The user's thumbs 1000a, 1000b are positioned on the upper left-hand and lower right-hand corner sensing regions 1301, 1304 respectively, which is a similar position to that shown in FIG. 10C with the smartphone form factor, although in this case the user's thumbs are positioned a greater distance apart in view of the larger screen size. FIG. 13B illustrates the same four sensing regions again, with the user's left thumb 1000a positioned on the lower left-hand sensing region 1303 and the right thumb 1000b positioned on the lower right-hand sensing region 1304. To move from the position shown in FIG. 13A to the position of FIG. 13B, the user may simply slide his or her thumb along the side over the display 310 to the destination position, or alternatively may lift his or her thumb and reposition it over the fourth sensing region 1304. FIG. 13C illustrates an example of the device 300 with six sensing regions 1301, 1302, 1303, 1304, 1305 and 1306, where the sensing regions 1305 and 1306 are positioned between the regions 1301, 1302 and 1303, 1304, respectively. The user's left-hand thumb 1000a is in the same position as shown in FIG. 13A, while the user's right-hand thumb 1000b is positioned over the central bottom sensing region 1306.

Contact and force applied to these sensing regions illustrated in FIGS. 6A through 13C may be used for entry of data, such as a password. While leaving the thumb or finger stationary on one or more of the sensing regions on the touchscreen interface 110, the user may apply varying levels of pressure in a random or rhythmic pattern to be detected by the device 100 as a password. For example, the user may place a digit on a first sensing region, such as the region 1003 in FIG. 10A, and intermittently apply sufficient pressure to that sensing region to be detected by an associated force sensor 270, while maintaining at least contact with the first sensing region. The device 100 may detect the contact at the first sensing region, and detect the applied force at the first sensing region as well. The detected pattern of applied force may be converted to a digital representation which may then be matched against a stored password value. If there is a match, then the user is authenticated to the device 100, and the device 100 may grant access to data stores and functions. The "pressure pattern" used for this password may be a meaningful pattern, for example, a series of presses matching the rhythm of a song, or representing a numerical value, or it may have no meaning at all to the user.

Entry of a single pattern at a single sensing region on the display 110 in this manner may have some practical limitations on the complexity of the password that can be practically entered. Although an infinite number of applied force patterns may be developed for entry at the single sensing region by alternating between low-pressure and higher-pressure periods of varying length, practically speaking, the more complex the password, the longer it may take to enter it at a single sensing region. Instead, digits on both the user's left and right hands, such as the left and right-hand thumbs, may be used to enter pressure patterns at designated sensing regions, in the manner illustrated in FIGS. 10A through 13C.

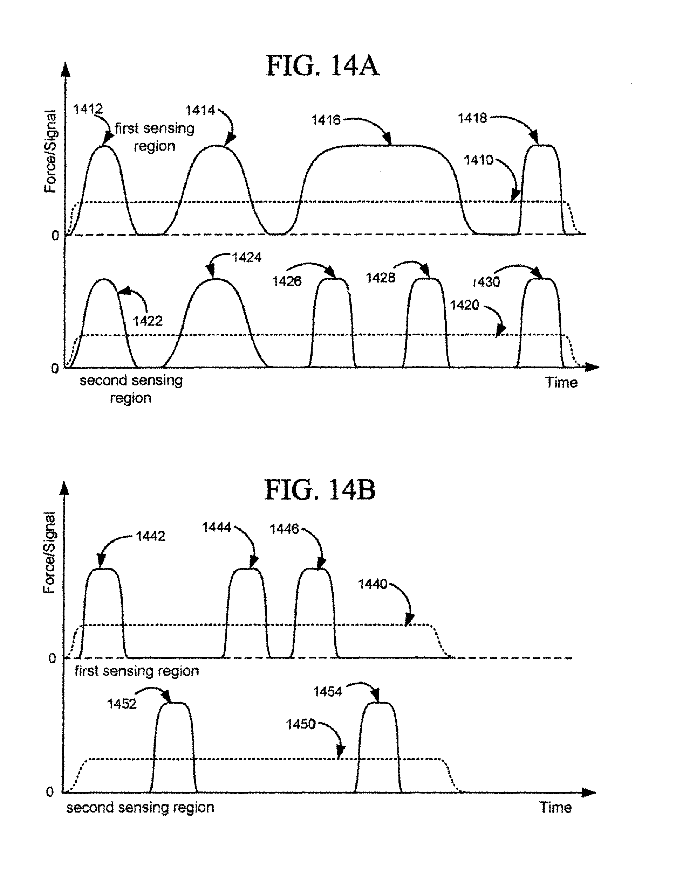

Examples of such pressure patterns are illustrated graphically in FIGS. 14A through 15, which are not necessary drawn to scale. FIG. 14A illustrates patterns of both contact and applied force by a user's thumbs on two corresponding sensing regions on a device 100. A zero baseline is indicated for both the left and right thumbs. For ease of reference, these baselines are assigned a nominal value of zero, although it will be appreciated by those skilled in the art that the baseline may reflect a non-zero bias if representative of a baseline signal from a force sensor or touchscreen interface. The dotted lines 1410, 1420 represent a signal received from the touchscreen interface 110. A non-zero signal (with reference to the nominal zero baseline) represents detected contact at the corresponding sensing region. The solid lines in respect of each of the left thumb and right thumb represent pressure detected by a corresponding force sensor 270 at the corresponding sensing region; variation between the baseline and the maximum represents varying pressure detected by the force sensor 270. Thus, in FIG. 14A, it can be seen that in this pressure pattern, initial contact was made at the first sensing region, for example by the user's left-hand thumb, and shortly thereafter pressure significant enough to be registered at the corresponding force sensor 270 was detected, resulting in a first peak at1412. The applied force at the first sensing region was then decreased to a zero point (i.e., below a detectable threshold at the force sensor 270), then increased again to a second peak at 1414. This pattern of decreasing force applied at the first sensing region, then applying increased force, was repeated two more times, resulting in third and fourth peaks at 1416 and 1418. The peak at 1416 has a greater duration in time than the other peaks 1412, 1414, 1418, indicating that pressure was applied for a longer period of time at that point. At the same time, it can be seen from the dotted line 1410 that contact was maintained at the first sensing region. Thus, the pressure pattern applied by the user's left thumb in this example comprises a series of four presses while the thumb was maintained in contact at the first sensing region, with the third press represented by the peak 1416 being longer than the previous two, and the fourth press represented by the peak 1418 being significantly shorter than the third press. Contact with the first sensing region was broken shortly after the fourth press was completed.

At the same time, FIG. 14A illustrates that a pressure pattern was applied at a second sensing region, for example by the user's right thumb, over the same period of time as the pressure pattern applied at the first sensing region. As shown by the dotted line 1420, contact with a second sensing region was maintained throughout the pattern. The pressure pattern, as indicated by the peaks 1422 through 1430, includes peaks 1422, 1424, 1430 resembling the left thumb presses represented by the peaks 1412, 1414, 1418. However, the right thumb pattern includes two quick presses, represented by the peaks 1426 and 1428. As can be seen by their alignment along the time axis in FIG. 14A, these two quick presses represented by the peaks 1426 and 1428 take place at the same time as the longer press detected at the first sensing region represented by 1416. Contact with the second sensing region was broken shortly after the fifth press was completed. Thus, in this pressure pattern, both the first and the second sensing regions detect continuous contact and a series of presses that are similar with the exception of two quick presses detected at the second sensing region at the same time as a longer press detected at the first sensing region. In this example, then, a more complex pressure pattern may be detected at the touchscreen interface 110 than if only a single sensing region were employed.

FIG. 14B illustrates another example of a pressure pattern detected at first and second sensing regions. In this example, contact is maintained throughout the pressure pattern at both the first and second sensing regions; however, there are no concurrent presses as in the example of FIG. 14A. At a first sensing region, contact is initially detected as illustrated by the dotted line 1440. This may signify initial contact, without extra applied force, at the first sensing region by the user's left thumb. Shortly thereafter, a press is detected at the first sensing region, as illustrated by the first peak 1442. There is then a "pause" at the first sensing region, where contact is maintained as indicated by the line 1440, but no pressure is detected by the corresponding force sensor 270. Two more quick presses are then detected, as indicated by the peaks 1444 and 1446, then contact is maintained as indicated by the line 1440 for some period of time afterwards. Concurrently, a second sensing region detects contact, for example by the user's right thumb. While contact is initially detected at approximately the same time as it was detected at the first sensing region, for an initial period of time no additional pressure is detected at the second sensing region until the first peak 1452 indicates a first press. There is then a gap in a pressure signal until the second peak 1454. Throughout, however, contact is maintained throughout at the second sensing region, as indicated by the dotted line 1450. Contact is broken at both the first and second sensing regions at substantially the same time.

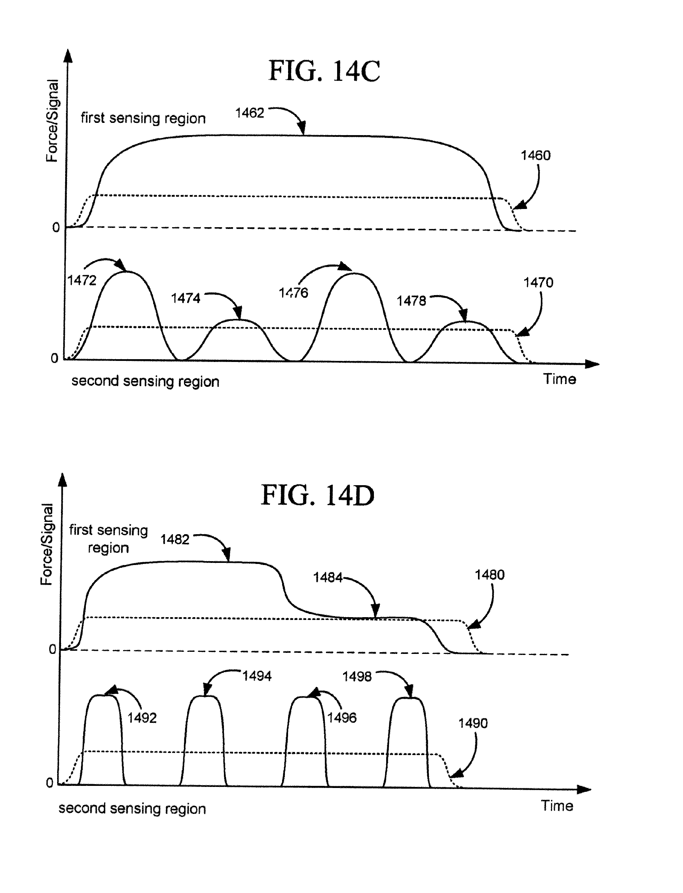

FIGS. 14C and 14D introduce further variations, for devices 100 comprising force sensors 270 capable of sensing and indicating different levels of applied force to the controller or processor 102. The sensor 270 may be adapted to transmit a signal indicative of one of two or more discrete levels of applied force sensed by the sensor, or to transmit a signal indicative of a continuum of applied force levels. In the examples of FIGS. 14C and 14D, a simple case in which the force sensors 270 are configured to detect two levels of applied force is used. In FIG. 14C, it can be seen from the dotted line 1460 that contact is applied to the touchscreen interface 110 at the first sensing region and shortly thereafter applied force is detected by the corresponding force sensor 270, as indicated by the peak 1462. At the same time, contact is also initiated at the second sensing region as indicated by the line 1470, and shortly afterwards a series of presses, alternating heavier and lighter, but still with sufficient force to be detected by the associated force sensor 270, is applied, as can be seen by the peaks 1472, 1474, 1476, 1478. Between these alternating presses, the user releases pressure on the second sensing region while still maintaining contact; thus, the pressure signal drops to zero between each of the peaks 1472..1478. FIG. 14D also illustrates a pressure pattern in which varying pressure is applied at one sensing region while periodic pressure of a constant level is applied at the second sensing region. For both sensing regions, contact is initiated at approximately the same time, and maintained throughout the pressure sequences, as can be seen by lines 1480 and 1490. At the first sensing region, a first level of applied force is detected shortly thereafter, as indicated by the first peak 1482; subsequently, the applied force is lessened, but still sufficient to be detected by the force sensor 270. Accordingly, a plateau is indicated at 1484 that is still above the zero level. At the same time, four quick presses are detected at the second sensing region as indicated by peaks 1492, 1494, 1496, 1498. Both the applied pressure and the contact detected at the first and second sensing regions end at approximately the same time.

The foregoing examples of FIGS. 14A through 14D involve two concurrent points of contact. Any of the examples of FIGS. 10A through 13C illustrate suitable thumb positions over sensing regions for entering these pressure patterns. However, further complexity may be added to the password by altering the pressure pattern to apply to more than two sensing regions. For example, with reference to FIGS. 10A and 10B, the user may enter the pressure pattern using his or her thumbs 1000a, 1000b at first and second sensing regions 1003, 1002 as indicated in FIG. 10A, but partway through the entry of the pressure pattern, at least one of the thumbs may be moved to a second position, as in FIG. 10B. In FIG. 10B, the user's left thumb 1000a has remained stationary, but the user's right thumb 1000b has been repositioned to cover another sensing region 1004. A pressure sequence may be applied by the user's left thumb 1000a at the first sensing area 1003 while the user's right thumb 1000b applies a pressure sequence at the second sensing region 1002; but partway through the pressure pattern, the user may move his or her thumb 1000b to the third sensing region 1004 to continue entering the pressure sequence.

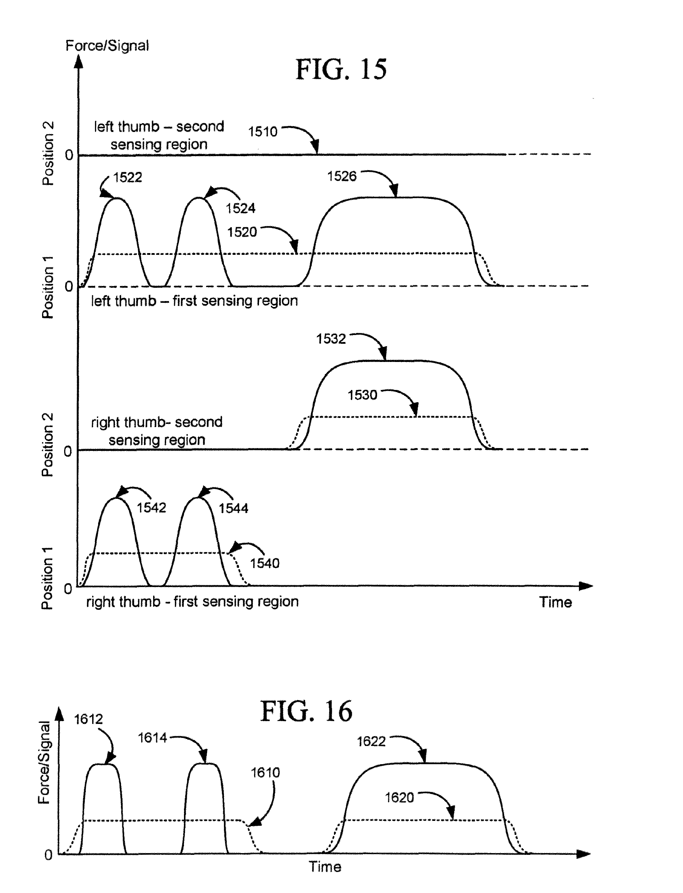

A graphical representation of an example of this technique is shown in FIG. 15. Four zero baselines are shown in this graph to reflect the baselines for each of a pair sensing regions to be associated with a corresponding one of the user's digits, such as the thumb. For the left thumb, it can be seen that contact, as well as a sequence of presses, has been detected at the first sensing region. Dotted line 1520 indicates a that contact has been made and maintained at the first sensing region, while the peaks 1522, 1524 and 1526 indicate that a series of presses has been detected. In FIG. 10A, the first sensing region may be the region 1003. For a second sensing region associated with the left thumb, such as the sensing region 1001 in FIG. 10A, no contact or pressure has been detected. For the right thumb, it can be seen that both the first sensing region and the second sensing region have been used. Initially, contact is detected at the first sensing region associated with the right thumb, as indicated at 1540. At the same time, two presses have been detected in this first sensing region, as indicated by peaks 1542 and 1544. The first sensing region for the right thumb may be the position 1002 in FIG. 10A. Subsequently, contact is broken at the first sensing region and then detected again at the second sensing region, which may be the region 1004 in FIG. 10A. Pressure is again detected at the second sensing region, as indicated by peak 1532. Thus, in this example, the user has kept his or her left thumb 1000a in the first sensing region 1003 and entered a pressure sequence at that position, and entered part of a pressure sequence at a first sensing region 1002 with the right thumb, moving to the second sensing region 1004 to complete the pressure sequence. When moving from the first sensing region 1002 to the second sensing region 1004, the user may have lifted his or her right thumb from the surface of the touchscreen display 110, thus breaking contact with the touchscreen display 110 altogether; alternatively, though, the user may have kept his or her right thumb in contact with the touchscreen display 110, so as to indicate to the device 100 that the entry of the pressure pattern was not yet complete. If the pressure pattern is used as a password for the device 100, breaking contact with the touchscreen display 110 by lifting one's thumb or finger may be interpreted by the processor 102 as a signal that password entry had ended. Thus, in an example such as that shown in FIG. 16, the fact that there is a gap in the contact signals 1610 and 1620 may be interpreted by the device as an indication that the pressure sequence entered comprised only the peaks 1612 and 1614, and that the further peak 1622, detected only after contact was re-established, should be disregarded.

Thus, the foregoing examples have illustrated different methods for entering a pressure pattern at one, two or three designated positions (i.e., sensing regions) on a touchscreen display. It will be appreciated that even more complex pressure patterns may be entered, for example by adding pressure applied to a fourth sensing region, or by moving the user's fingers or thumbs more than once during the course of password entry.

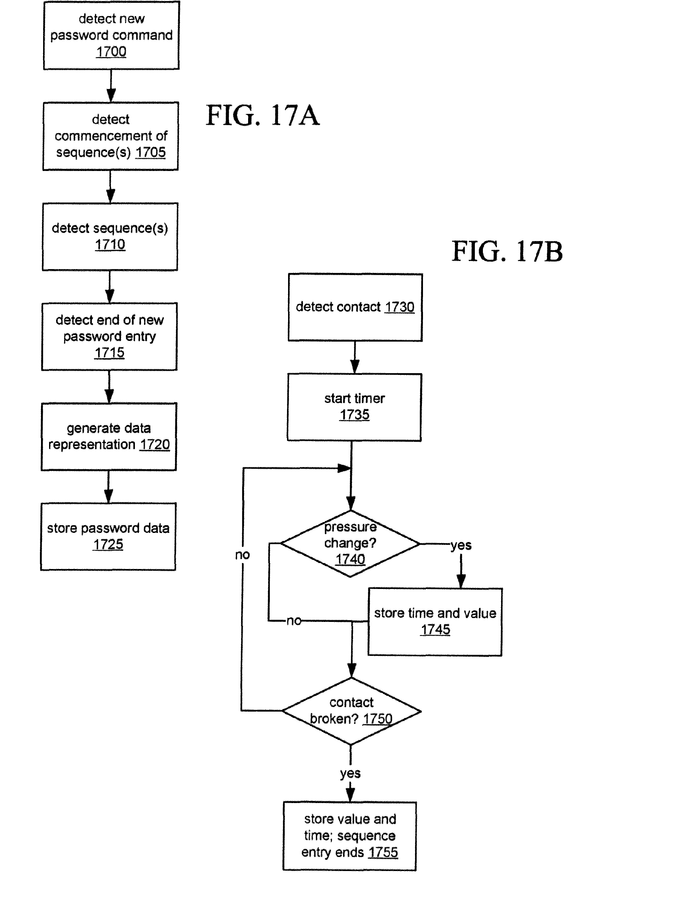

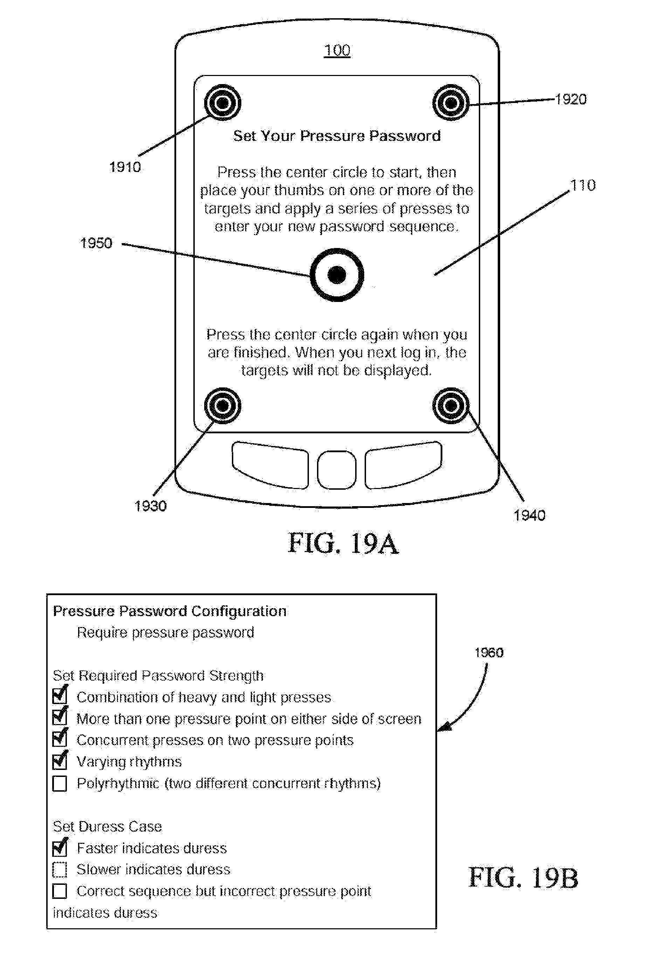

A process for defining a new password comprising a pressure sequence to be used at a device 100 is illustrated in FIG. 17A. At 1700, a new password command or instruction is detected. This may be the result of an explicit command actuated by the user to set a new password for the device 100, or it may be a response to a received instruction from a host system associated with the device 100, such as an enterprise network. At 1705, the device 100 detects commencement of the entry of a new pressure sequence or sequences, then detects and stores the sequence or sequences detected at 1710. At 1715, an end to password entry is detected, after which a representation of the detected pressure pattern is generated at 1720 and stored at 1725 (if it has not already generated and stored already as part of the step of 1710). Detecting commencement of password entry may be accomplished through detection of a specific user-entered signal. Turning to FIG. 19A, an example of a user interface that may be displayed on the device 100 is shown. In this example, the user is directed to press on a central target 1950 to indicate that the presses and contact that are to follow thereafter comprise a new password. After the user presses the central target 1950, the device 100 may enter a data collection mode in which it collects and stores the data generated by the touchscreen interface 110 and the force sensors (not shown in FIG. 19A) based on contact and presses at one or more of the target regions 1910, 1920, 1930 and 1940, since in the example of FIG. 19A four sensing regions have been defined at these target regions.

An example of how detection and storage of the user-entered pressure pattern may be carried out is described in FIG. 17B. This process may be carried out for each one of the sensing regions used to enter a pressure sequence; for each sensing region used, values are assigned to conditions of detected contact only and detected contact with applied pressure, and stored with reference to a timer value. At 1730, contact is detected at the sensing region. The detection of this contact, which may or may not be accompanied with an application of force detectable by the force sensor associated with that sensing region, initiates a timer at 1735. At 1740 a determination is made whether a change in applied force or pressure has been detected at the sensing region. If so, the current time based on the timer is stored along with a corresponding value reflecting the condition detected up until that point; in the case where only contact had been detected at the touchscreen interface 110, the value may be 0, and if both contact and pressure had been detected, the value may be 1. The process continues until it is detected that contact has been broken at 1750, for example by the user lifting his or her thumb from the touchscreen. At that point, a determination is made that the entry of the pressure sequence has ended at that sensing region and the value and time associated with that portion of the sequence is stored at 1755. Otherwise, the process continues until another pressure change is detected at 1740, either due to the user applying force at the sensing region when previously only contact was detected, or the user discontinuing applied force at the sensing region but maintaining contact with the touchscreen interface 110. The process ends as described above when it is detected that contact with the touchscreen interface 110 has been discontinued. In other embodiments, the process may end upon expiry of a predetermined period of time of contact at the touchscreen interface during which no applied force is detected, or upon detection of applied force at a particular sensing region signifying termination of the pressure sequence.

The data stored during this process may thus represent a set of pressure value and time value pairs, with the time values reflecting the duration of each event (either contact only or applied force) during the pressure sequence. Alternatively, the device 100 may simply store information about the state of the sensing region on a periodic basis, for example every tenth or hundredth of a second. Thus, if a 0 value reflects a state in which only contact is detected and a 1 represents a state in which contact and pressure is detected, the pressure pattern illustrated in FIG. 14B may be represented by:
11100000001110011100000 (first sensing region)
00000111000000000000111 (second sensing region)
If a data value is stored every tenth of a second in this example, then the total duration of the pressure sequence detected at the device 100 would be 2.3 seconds. In this example, 1 represents the periods where applied force was detected by the force sensor corresponding to that sensing region, and the 0 values represent the periods where no applied force was detected, but contact was maintained by the user at the sensing region. The selection of the time increment for recording this state information affects the precision of the timing information stored for the pressure sequence. For example, if an increment of 0.1 seconds is used and pressure applied at a sensing region lasts for 0.32 seconds, the duration may be stored at the device as either 0.3 or 0.4 seconds depending on the specific method used to record the pressure sequence information. This may provide a degree of tolerance for subsequent matching of a user-entered pressure password sequence against the previously-stored password data, since a user may not use the identical tempo when re-entering a password. If differing levels of pressure are detectable by the force sensor 270, as in the examples of FIGS. 14C and 14D, then additional values may be required in the pressure sequence information (for example, applied force may be recorded with a value of "1" or "2" depending on its level; in the string representing the pressure sequence, this may typically be recorded in a binary or hexadecimal format).

The data collected during the password entry period may be stored in this form; alternatively, it may be stored in a compressed or encrypted form, or hashed using a one-way hash prior to storage. If there is more than one string of data representing more than one sensing region, the data may be concatenated prior to processing and storage, or may be stored separately. Each string, however, may contain or be stored in association with an indicator of the sensing region used to input the pressure sequence.

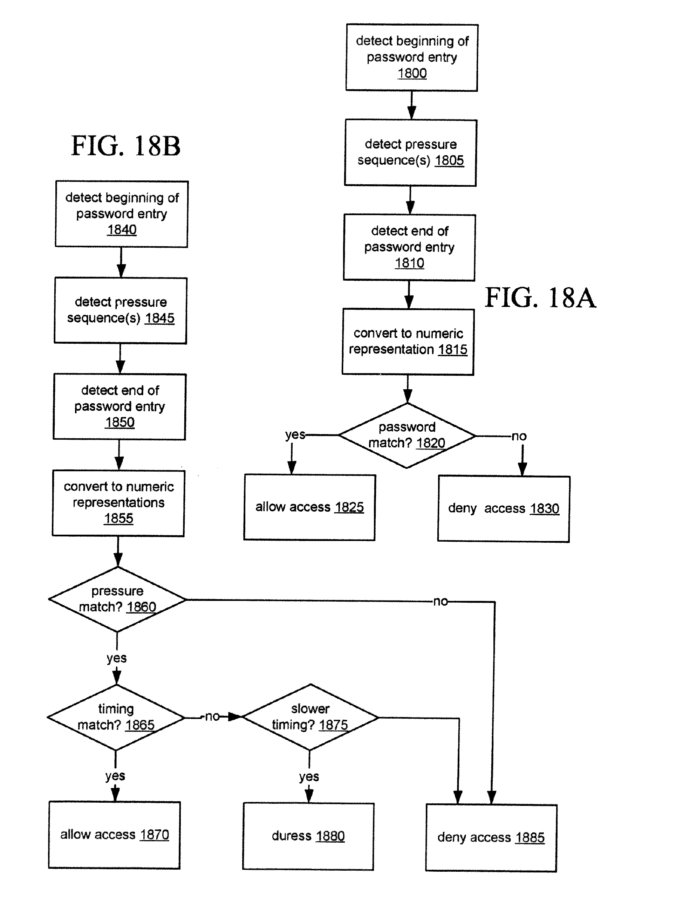

Subsequently, when a user wishes to authenticate him or herself to the device 100, he or she re-enters the previously set pressure pattern for matching against the previously stored data. An example of this process is illustrated in FIG. 18A. At 1800, the beginning of password entry is detected. This detection may be made simply by the device 100 detecting that the user has made contact on the touchscreen interface 110 at the designated sensing regions for the password, or alternatively in response to an "unlock" gesture or other input by the user, received either via the touchscreen interface 110 or by another input means. The user then makes contact with the designated sensing regions, if he or she has not already, and then commences entry of the pressure sequence. This is detected by the touchscreen display 110 and force sensor or sensors 270 at 1805, and information about the state of the sensing regions may be recorded generally in the manner described in relation to FIG. 17B. Once the end of password entry is detected at 1810-which may be determined by detecting that contact has been broken between the user and the touchscreen interface 110-the recorded information regarding the pressure sequence detected may be converted to an appropriate numeric or digital representation for the purpose of matching against the previously stored password data at 1815. For example, if the previously stored password data was stored in hashed form, the received input password pressure sequence may likewise be hashed prior to comparison with the stored data. At 1820 the received password data is compared to the previously stored data; if it matches, then access to the device 100 is permitted at 1825. Otherwise, access is denied at 1830.

In a further embodiment, a duress condition may be detected based on the method in which the pressure password is input. In a duress situation, an attacker may attempt to gain access to the user's device 100 by coercing the user into entering the password directly on the device 100 in the presence of the attacker. The attacker may then take possession of the device 100. Thus, it may be desirable for the user to take certain steps if a duress situation is suspected. For example, the user could initiate encryption of the data on the device, initiate a wipe of the device 100, or otherwise initiate a procedure to corrupt the data, so as to render inaccessible any sensitive data that may be compromised by the attack. However, under the circumstances the user may not have any opportunity to take these steps, as the attacker may be observing the user. The device 100 could therefore be configured to surreptitiously and automatically initiate deletion or encryption, or take some other duress response step, such as transmitting a message requesting assistance from law enforcement, or even executing a pre-programmed simulation to make it appear that the device 100 is broken and unable to access its data stores. Implementing these duress responses, however, still generally requires the user to indicate to the device 100 that a duress situation is suspected or occurring.

With a pressure password of the type described above, the user may indicate a duress condition by altering either the pressure or the tempo used to enter the password. An example of such a process is shown in FIG. 18B. The detection of password entry 1840, detection of pressure sequences 1845, and the detection of the end of password entry 1850 and conversion to a digital or numeric representation 1855 may be carried out generally as described with reference to FIG. 18A. However, the process of matching the entered password pressure sequence may be carried out in two stages. First, the pressure sequence, independent of timing of the pressure sequence, is compared to the pressure sequence of the stored password information at 1860. If the sequence does not match-for example, if the stored password includes a sequence of five presses, but the input password does not then the entered password is determined to be incorrect, and access is denied at 1885. Otherwise, a determination is made at 1865 whether the timing of the input pressure sequence matches. If it does, then access is granted at 1870. If, however, there is a timing mismatch-for example, if it is determined that the overall timing of the pressure sequence is significantly slower than the stored password information, for example by 25% or greater-then a duress condition is identified by the device at 1880.

It may be noted that in the majority of examples of FIGS. 10A through 13C that the position of the hands and the thumbs generally resembles hand positions that the user may naturally assume when holding the touchscreen device. Although a user may typically avoid placing his or her thumbs on the screen during normal use, and prefer to rest the thumbs on the device housing surrounding the screen, the approximate position of the thumbs shown in FIGS. 10A through 13C is generally feasible even without placing the thumbs in contact with the touchscreen. For example, in FIG. 10A, the position of the thumb 1000a, in particular, resembles a position in which the user might normally hold the device 100 while perusing its display, or merely transporting the device 100 from one place to another. Because these thumb positions generally approximate the position of the thumbs during typical use of the device, the slight difference when the thumbs are brought into contact with the touchscreen surface will not be as remarkable as the actions normally undertaking by a user pressing virtual keys on a virtual keyboard displayed on the touchscreen. Thus, in some circumstances, a grip such as that shown in FIGS. 10A through 13C may appear casual to the observer, and not indicative of password entry; the user may therefore be able to input his or her password without an observer realizing that the user is in fact entering credentials. Further, even if the user's actions are observed as the password is entered at the device, the minimal movement of the user's hands and thumbs in applying pressure at the designated areas may be more difficult for the attacker to discern, thus making it more difficult for the attacker to learn the pressure combination of the password.

Indeed, because the user's password entry may be virtually motionless and is carried out at designated areas of the touchscreen, it is not necessary for any graphical user interface to be displayed, such as a virtual keypad for entering the password. The appearance of a virtual keypad or number pad on a touchscreen display may signal to an observer that the user is entering a password. However, with the foregoing embodiments, the display may even be completely blank, and the user may still be able to enter the password at the correct points of the touchscreen. Further, because the password is entered at designated points on the touchscreen display, the user need not observe the display while the password is being entered to continually verify that his or her thumbs are positioned in the correct locations. By contrast, when a password is entered using a virtual keyboard or keypad on a touchscreen device, the user may need to repeatedly or continuously observe the screen to ensure that he or she is touching the correct areas of the screen. This reduced need for a graphical user interface for inputting the password and reduced screen area used for password entry may therefore result in reduced consumption of battery life and reduced wear and tear on the display screen.

The password requirements and policy may be set at the communication device 100. However, these settings may be configured remotely, at a host system in communication with the communication device 100. The host system may be a corporate enterprise or other local area network (LAN), but can also be a home office computer or some other private system, or a server maintained by a telecommunications provider for example, in variant implementations. The communication device 100 may be in communication with the host system over a LAN or wireless LAN, or over a public or private network. The public or private network may be accessed via the wireless network 200. Data from the host system may be transmitted to the communication device 100 over the LAN, WLAN, or other network. In other embodiments, the communication device 100 may be physically connected to the host system via a cradle, which can be coupled to a device such as the user's computer. The cradle facilitates the loading of information (e.g. PIM data, private symmetric encryption keys to facilitate secure communications) to the communication device 100, and can be particularly useful for bulk information updates often performed in initializing the communication device 100 for use, or for updating information technology policies at the device such as password settings. The host system may include an IT Policy editor and server, as well as other software components for allowing an IT administrator to configure the communication devices 100 registered with the host system. The IT Policy may set rules for passwords, as mentioned above, as well as other configuration settings for communication devices 100, such as auto signature text, WLAN/VoIP/VPN configuration, other security requirements (e.g. encryption algorithms), specifying themes or applications that are allowed to run on the communication device 100, and the like.

FIG. 19B illustrates an exemplary interface 1960 that may be used at the host system 250 to set conditions and rules for the use of a pressure password as described above. For example, to enhance the complexity and strength of the password sequence, the user may be required to use a combination of heavy and light presses (if the force sensors 270 are capable of detecting different levels of applied force); more than one sensing region on the device 100; concurrent presses on two sensing regions (as in the example of FIGS. 14A, 14C and 14D); varying rhythms at a single sensing region; or polyrhythmic patterns, in which pressure sequences with different rhythms are used concurrently at two sensing regions. The interface 1960 may also permit the user or an administrator to set a duress case, such as the correct pressure sequence, but faster or slower than the previously stored password, or the correct pressure pattern and timing, but applied at different sensing regions than those in respect of which the password was initially recorded.

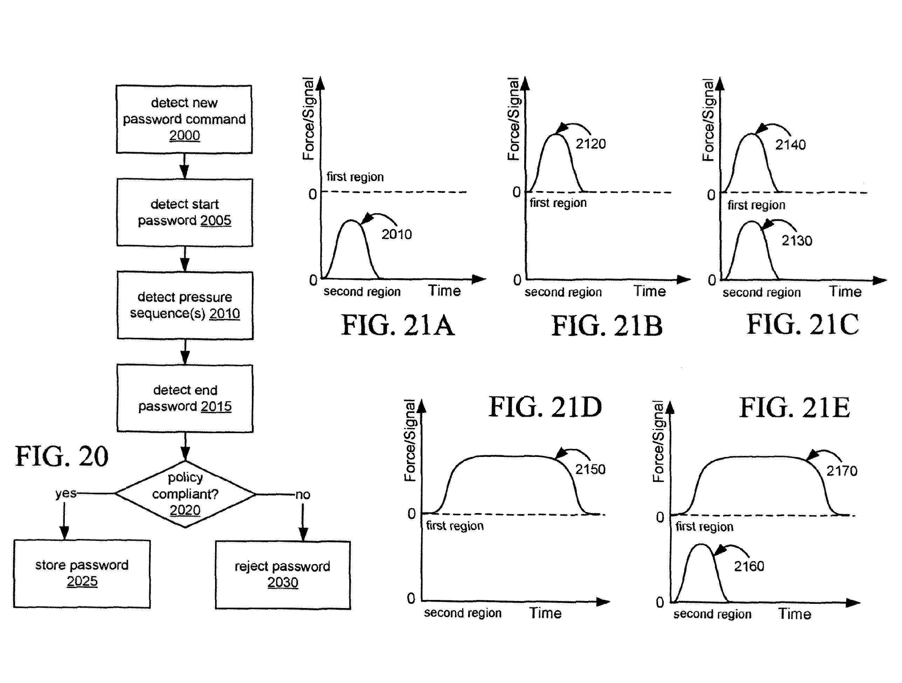

FIG. 20 illustrates a process that may also be applied at the time a new password is set to ensure that the new input password complies with any established policy settings. At 2000, a new password command is detected, and the entry of the new password is detected at 2005 through 2010. After the end of the password entry is detected at 2015, it is determined whether the entered password is compliant with any established policies at 2020. If it is, the password may be stored at 2025 in the manner described above; otherwise, the password is rejected at 2030, and the user may be requested to re-attempt new password entry.

As described above, the pressure pattern may have implicit meaning or significance to the user, or it may not. It will be appreciated that the combination of presses that may be applied concurrently at two sensing regions may be used to represent letters, digits or other characters in various alphabets or languages. A simple example is illustrated in FIGS. 21A through 21E, in which presses are detected at both a first and a second sensing region, which may be contacted by a user's left and right thumb, respectively. A single short press detected at the second sensing region with no corresponding concurrent press detected in the first sensing region, as shown in FIG. 21A, may be interpreted as the value "1" (or "01" in binary), whereas a single short press detected at the first sensing region with no concurrent press at the second sensing region, as illustrated in FIG. 21B, may be interpreted as the value "2" (or 10 in binary). Two concurrent, quick presses at both the first and second regions, as shown in FIG. 21C, may represent the value "3", and a single, long press at the first sensing region with no concurrent press at the second sensing region, illustrated in FIG. 21D, may represent the value "4". FIG. 21E illustrates a concurrent long press at the first sensing region and a quick press at the second sensing region, which may represent the value "5". Additional values may be represented by adding further presses to the first sensing area, the second sensing region, or both, or by also incorporating presses at a third and optionally a fourth sensing region. These pressure combinations may also be assigned to letters. There is thus provided a method of inputting information, such as a PIN or word, without requiring the use of a separate physical keyboard or the display of a virtual keyboard on the touchscreen 110.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that steps and the order of the steps in the processing described herein may be altered, modified and/or augmented and still achieve the desired outcome. Further, the embodiments described above were described with reference to a touchscreen interface and force sensors adapted to detect applied force at the surface of the touchscreen interface. In other embodiments, force may be detected at other user input interfaces, such as physical keyboards, buttons, and other user-actuatable physical elements provided on the device 100. For example, one or more force sensors 270 may be disposed beneath a physical keyboard 116, such that application of differing levels of force may be detected by the force sensors when keys of the keyboard 116 are depressed. Thus, pressure sequences such as those described above may be input at one or more keys of the keyboard 116 and detected using a controller associated with the force sensors and/or the processor 102. If the keyboard 116 is also provided with capacitive keys, contact may also be detected by the keyboard 116 in addition to the differing levels of force. Similarly, buttons, such as capacitive buttons, may also be provided with corresponding force sensors 270 such that both contact and pressure may be detected by the buttons. The methods described herein may thus be carried out using the keyboard 116 or buttons in these embodiments.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A handheld communication device (100, 300), comprising:
a touchscreen interface (110, 310, 102) comprising means adapted to detect contact at each of a plurality of sensing regions defined at a surface of the touchscreen interface;
a plurality of force sensors (270, 102), each force sensor corresponding to one of the plurality of sensing regions, each force sensor being adapted to detect a press comprising force above a predetermined threshold applied at the corresponding sensing region;
means (102) adapted to detect a sequence of presses applied to each of said sensing regions, wherein contact is continuously detected at each of said sensing regions while said sequence is being detected;
means (102) adapted to match each said sequence of presses against previously stored data at the device; and
means (102) adapted to permit access to functions or data at the device upon determining that each of said sequence of presses matches the previously stored data.

2. The handheld communication device of claim 1, wherein the plurality of sensing regions comprises at least two sensing regions.

3. The handheld communication device of either claim 1 or 2, wherein the sequences of presses applied to each of the corresponding sensing regions are applied concurrently.

4. The handheld communication device of any one of the preceding claims, wherein at least one detected sequence of presses comprises presses of varying force.

5. The handheld communication device of any one of the preceding claims, wherein each of the plurality of sensing regions are defined at the surface of the touchscreen interface in positions within a natural reach of a user's thumb (1000a, 1000b) when the device is gripped by the user's hands.

6. The handheld communication device of any one of the preceding claims, wherein the touchscreen interface comprises a capacitive touchscreen interface.

7. The handheld communication device of any one of the preceding claims, wherein the device comprises a smartphone.

8. A method of allowing access to functions or data at a handheld communication device (100), the method comprising:
detecting contact at each of a plurality of sensing regions (1730), the sensing regions being defined at a surface of a touchscreen interface of the device, the touchscreen interface being configured to detect said contact;
detecting a sequence of presses (1735-1755, 1805) applied to each of said sensing regions, each said sequence of presses being detected using a corresponding force sensor, wherein contact is continuously detected at each of said sensing regions while said sequence is being detected;
matching each said sequence of presses against previously stored data at the device (1820); and
permitting access to functions or data at the device upon determining that each of said sequence of presses matches the previously stored data (1825).

9. The method of claim 8, wherein the plurality of sensing regions comprises at least two sensing regions.

10. The method of claim 9, wherein detecting contact comprises detecting said contact at each of two sensing regions and detecting the sequence of presses comprises detecting said sequence of presses applied concurrently at said two sensing regions.

11. The method of any one of claims 8 to 10, wherein at least one detected sequence of presses comprises presses of varying force.

12. The method of any one of claims 8 to 11, wherein each of the plurality of sensing regions are defined at the surface of the touchscreen interface in positions within a natural reach of a user's thumb (1000a, 1000b) when the device is gripped by the user's hands.

13. The method of any one of claims 8 to 12, wherein the touchscreen interface comprises a capacitive touchscreen interface.

14. The method of any one of claims 8 to 13, wherein the device comprises a smartphone.

15. A computer storage medium bearing code which, when executed, causes a computing device comprising a touchscreen interface and a plurality of force sensors to carry out the method of any one of claims 9 to 14.
